# EUROPEAN PATENT APPLICATION

(11) **EP 4 307 455 A1**
(43) Date of publication of application: **17.01.2024**
(21) Application number: 22765396.1
(22) Date of filing: 07.03.2022
(51) Int. Cl.: H01M 50/463, H01M 10/06, H01M 10/08, H01M 50/434, H01M 50/44, H01M 50/451, H01M 50/454, H01M 50/489

(54) **SEPARATOR FOR LEAD ACID STORAGE BATTERIES, AND LEAD ACID STORAGE BATTERY**

(30) Priority: 10.03.2021 JP 2021038245
(71) Applicant: Asahi Kasei Kabushiki Kaisha, Tokyo 1000006 (JP)
(72) Inventor: IWAMA, Juri, Tokyo 100-0006 (JP); IIZUKA, Yasuhito, Tokyo 100-0006 (JP)
(74) Representative: Strehl Schübel-Hopf & Partner
(86) International application number: PCT/JP2022/009803
(87) International publication number: WO 2022/191145

(57) **Abstract**

The present disclosure provides a separator for lead acid storage batteries, the separator comprising a base material and a conductive layer that is superposed on at least one surface of the base material. The conductive layer has cracks; and the conductive layer contains a fibrous conductive material which has an average fiber diameter that is from 1% to 30% of the average crack width of the cracks.

## Description

### FIELD

The present disclosure relates to a separator for a lead-acid battery as well as a lead-acid battery which uses the same.

### BACKGROUND

Lead-acid batteries are widely used worldwide in automotive applications such as passenger cars, buses, trucks, motorcycles, and golf carts, as well as industrial applications such as forklifts, farm machinery, railroads, UPS, and communication equipment. In recent years, in particular, in in-vehicle applications, a performance which can support operation at approximately 50% to 80% partial state of charge (PSoC), such as in hybrid electric vehicles (HEV) and idling start and stop (ISS) vehicles, is required.

The primary performance requirements for lead-acid batteries are charge acceptance, cycle performance, and water loss characteristics (water loss performance). Lead-acid batteries having charge control functions and regenerative charging functions to improve environmental performance and fuel efficiency have short and limited charging opportunities. Thus, charge acceptance is required in order to efficiently charge the battery with a large amount of energy. If the battery is maintained at a PSoC for a long time, the cycle characteristics tend to deteriorate. The reason for this is that in PSoC batteries, highly crystalline sulfate is likely to form on the electrode surface, and the accumulation of the formed sulfate crystals dramatically reduces the charge acceptance performance of the electrode (sulfation), which ultimately leads to the end of its life. When the negative electrode reaches the hydrogen generation potential, water is decomposed and water loss occurs. Thus, from the viewpoint of maintainability, it is necessary to improve and maintain the water loss characteristics.

Separators for lead-acid batteries are generally membranes having a microporous structure with withstand voltage characteristics, and are arranged in close contact with the surfaces of both the positive electrode and the negative electrode in order to prevent short-circuiting between the electrodes. Conventionally, a structure (also simply referred to as a "layer" or "coating layer") is provided on the surface of the substrate of the separator for a lead-acid battery in the separator surface (x-axis y-axis plane) direction so as to function as an auxiliary conductive path of the electrode for the purpose of promoting the electrode surface reaction and improving charge acceptance and cycle characteristics. However, since the electrical resistance (ER) of the separator in the electrolyte is increased by this structure, there are problems in that the internal resistance of the battery is increased and a decrease in the initial discharge capacity of the lead-acid battery occurs.

Patent Literature 1 discloses a technology of using a battery separator having carbon nanotubes applied or added thereto to obtain improved charge acceptance, improved surface conductivity, improved oxidation resistance, reduced acid stratification, improved metal contamination-induced oxidation resistance, reduced black residue, improved wetting performance, and improved stiffness.

Patent Literature 2 discloses a technology of using a battery separator having an engineered carbon material applied or added thereto to improve charge acceptance and cycle life of lead-acid batteries.

Patent Literature 3 discloses a technology of using a battery separator having carbon nanotubes applied or added thereto to reduce dendrite formation, improve charge acceptance, and improve cycling performance in lead-acid batteries.

### [CITATION LIST]

### [PATENT LITERATURE]

[PTL 1] WO 2017/062461
[PTL 2] WO 2015/171595
[PTL 3] Japanese Unexamined PCT Publication (Kohyo) No. 2020-533741

### SUMMARY

### [TECHNICAL PROBLEM]

Patent Literature 1, 2, and 3 do not describe reduction in electrical resistance (hereinafter also referred to as "ER") regarding battery separators in the electrolyte and the means therefor. Furthermore, they do not describe reduction in surface resistance and the means therefor.

An object of the present disclosure is to provide a separator for a lead-acid battery having a low surface resistance and a low electrolyte ER, and a lead-acid battery using the same.

### [SOLUTION TO PROBLEM]

Examples of embodiments of the present disclosure are listed below.
[1] A separator for a lead-acid battery, comprising a substrate, and a conductive layer laminated on at least one surface of the substrate, wherein
   the conductive layer has cracks, and the conductive layer comprises a first conductive material and a fibrous second conductive material which has an average fiber diameter of 1% or more and 30% or less of an average crack width of the cracks.
[2] The separator for a lead-acid battery according to Item 1, wherein the fibrous second conductive material is a fibrous carbon material.
[3] The separator for a lead-acid battery according to Item 1 or 2, wherein a percentage of an area occupied by the cracks is 0.1% or more and 30% or less of an entire surface of the conductive layer.
[4] The separator for a lead-acid battery according to any one of Items 1 to 3, wherein at least a part of the fibrous second conductive material extends from the conductive layer toward a gap of the cracks.
[5] The separator for a lead-acid battery according to any one of Items 1 to 4, wherein the average crack width of the cracks is 1.0 µm or more and 20.0 µm or less.
[6] The separator for a lead-acid battery according to any one of Items 1 to 5, wherein the conductive layer has a thickness of 0.1 µm or more and 30 µm or less.
[7] The separator for a lead-acid battery according to any one of Items 1 to 6, wherein the cracks extend from a surface of the conductive layer to a layer-substrate boundary.
[8] The separator for a lead-acid battery according to any one of Items 1 to 7, wherein the fibrous second conductive material is carbon nanotubes.
[9] The separator for a lead-acid battery according to any one of Items 1 to 8, wherein the first conductive material comprises a carbon material.
[10] The separator for a lead-acid battery according to any one of Items 1 to 9, wherein the first conductive material comprises at least one selected from the group consisting of furnace black, acetylene black, and ketjen black.
[11] A lead-acid battery, comprising a positive electrode, a negative electrode, an electrolyte, and the separator for a lead-acid battery according to any one of Items 1 to 10 between the positive electrode and the negative electrode.
[12] The lead-acid battery according to Item 11, wherein the electrode comprises at least one of a metal having a standard electrode potential of -0.7 V or less and a metal compound comprising the metal.
[13] The lead-acid battery according to Item 11 or 12, wherein the electrolyte comprises at least one of zinc and a zinc compound.

### [ADVANTAGEOUS EFFECTS OF INVENTION]

According to the present disclosure, there is provided a separator for a lead-acid battery having a low surface resistance and a low electrolyte ER, and lead-acid battery using the same.

### BRIEF DESCRIPTION OF DRAWINGS

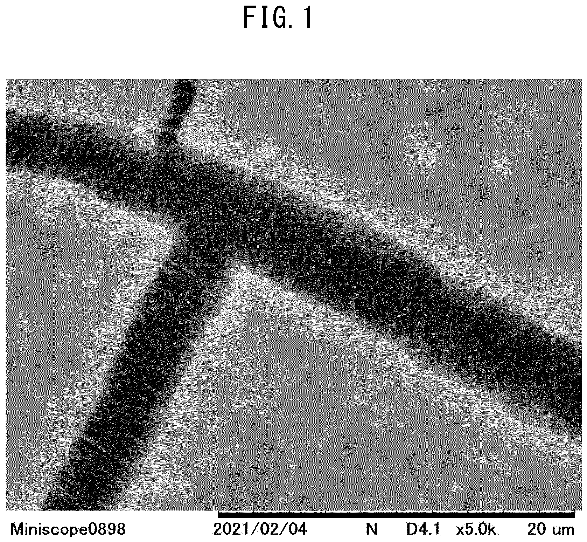

FIG. 1 is an example of a surface image of the separator for a lead-acid battery having a conductive layer of Example 1, captured with a scanning electron microscope (SEM).

### DESCRIPTION OF EMBODIMENTS

### Separator for Lead-Acid Battery

The separator for a lead-acid battery of the present disclosure (hereinafter referred to simply as "separator") comprises a substrate, and a conductive layer laminated on at least one surface of the substrate. The conductive layer has cracks, and the conductive layer comprises a first conductive material and a fibrous second conductive material. It is preferable that the fibrous second conductive material be present in the gaps caused by the cracks. The separator of the present disclosure is arranged between a positive electrode and a negative electrode to prevent electrical shorting between the positive and negative electrodes. The conductive layer may be laminated to both sides of the substrate and may be fully or partially laminated to one or both sides of the substrate. As used herein, the case where the conductive layer is said to be "laminated" on one or both sides of the substrate encompasses the case where the conductive layer is directly laminated on the substrate and the case where it is indirectly laminated via another layer. The separator is conventionally microporous so that ions can permeate therethrough. The maximum pore size of the separator is preferably 500 nm or less, 400 nm or less, 300 nm or less, 200 nm or less, or 150 nm or less.

### Conductive Layer

The "cracks" are spatial gaps that break the continuity of the surface of the conductive layer in the separator comprising the conductive layer on the substrate, and the term "cracks" refers to groove-like structures formed in the thickness direction (z-axis direction) from the surface (x-axis and y-axis plane) of the conductive layer. The groove-shaped structures need not necessarily extend from the surface of the conductive layer to the layer-substrate interface (separator surface), but from the viewpoint of reducing ER in the electrolyte, it is preferable that they reach the layer-substrate interface.

A conductive layer can reduce surface resistance and ER in the electrolyte. Though not to be limited by theory, the reason is presumed as follows. Conventionally, in order to promote electrode surface reaction by acting as an auxiliary conductive path for the electrode and to improve charge acceptance and cycling characteristics, a structure (also simply referred to as a "layer" or "coating layer") is provided on the surface of the substrate of the separator for a lead-acid battery in the separator surface (x-axis y-axis plane) direction. Examples of the material of such structure include inorganic substances, organic substances, and mixtures of organic and inorganic substances. However, since such a structure inhibits the movement of charge in the thickness direction in the electrolyte, there has been a problem in that the ER of the separator in the electrolyte increases, whereby the internal resistance of the battery increases and the initial discharge capacity of the lead-acid battery decreases. Thus, in the present disclosure, cracks are intentionally formed in the conductive layer, and a fibrous second conductive material is present in the gaps formed by the cracks to form conductive paths, whereby it is believed that the surface resistance can be reduced and the ER in the electrolyte can be reduced.

From the viewpoint of reducing ER in the electrolyte, the conductive layer preferably has an average crack width of 1 µm or more and 20 µm or less, 1 µm or more and 10 µm or less, or 5 µm or more and 10 µm or less, as measured by the method described later. The pattern of the cracks is not particularly limited, and as a specific example, the surface of the conductive layer may have a pattern (design) such as a striped pattern, a lattice pattern, or a branched (cracked) pattern. From the viewpoint of reducing surface resistance and reducing ER in electrolyte, the ratio of the area occupied by cracks relative to the entire surface of the conductive layer is preferably 0.1% or more and 30% or less, 1% or more and 20% or less, or 4% or more and 15% or less.

### Thickness of Conductive Layer

From the viewpoint of suppressing peeling of the conductive layer and detachment thereof from the separator, and forming a uniform conductive layer on the surface of the substrate, the thickness of the conductive layer is preferably 0.1 µm or more and 30 µm or less, 1 µm or more and 30 µm or less, 1 µm or more and 25 µm or less, 1 µm or more and 20 µm or less, or 1 µm or more and 15 µm or less.

### Second Conductive Material

From the viewpoint of reducing surface resistance and reducing ER in the electrolyte, the conductive layer preferably comprises a fibrous second conductive material in the cracks. From the viewpoint of reducing the surface resistance and reducing the ER in the electrolyte, it is preferable that at least part of the fibrous second conductive material extend from the conductive layer toward the gaps of the cracks. More preferably, the fibrous second conductive material is present so as to bridge a plurality of locations of the cracks. A single crosslink may be formed by a single fiber of the fibrous conductive material or a bundle of a plurality of fibers of the fibrous conductive material.

The average fiber diameter of the fibrous second conductive material, as measured by the method described later, is 1% or more and 30% or less, preferably 2% or more and 20% or less, or 3% or more and 10% or less of the average crack width. The absolute value of the average fiber diameter of the fibrous second conductive material is preferably 1 nm or more and 1500 nm or less, 5 nm or more and 1000 nm or less, or 10 nm or more and 750 nm or less.

The fibrous second conductive material contained in the conductive layer is preferably a fibrous carbon material so as not to influence battery performance. Examples of fibrous carbon materials include carbon fibers, carbon nanofibers, and carbon nanotubes. The fibrous second conductive material is more preferably carbon nanofibers or carbon nanotubes from the viewpoint of reducing surface resistance and reducing ER. Among the foregoing, carbon nanotubes are more preferable.

From the viewpoint of reducing surface resistance and reducing ER in electrolyte, the amount of the fibrous second conductive material contained in the entire conductive layer is preferably, based on the total weight of the conductive layer, 0.001% or more and 10 wt.% or less, 0.005% or more and 5 wt.% or less, or 0.01% or more and 3 wt.% or less.

### First Conductive Material

From the viewpoint of conductivity, the conductive layer comprises the first conductive material in addition to the fibrous second conductive material. The conductive layer may preferably comprise 50 wt.% or more, 70 wt.% or more, 80 wt.% or more, or 90 wt.% or more of the first conductive material, based on the total weight of the conductive layer. The upper limit of the amount of the first conductive material that can be combined with these lower limits is not particularly limited, and may be, for example, 95 wt.% or less, 90 wt.% or less, 85 wt.% or less, or 80 wt.% or less. The first conductive material in addition to the fibrous second conductive material preferably comprises a carbon material. Examples of the first conductive material include carbon clusters such as graphite, activated carbon, carbon black, graphene, and fullerenes, carbon monolithic materials, and mixtures thereof. Among the above carbon materials, from the viewpoint of conductivity, furnace black, acetylene black, ketjen black, and graphite are more preferable, and furnace black, acetylene black, and ketjen black are more preferable.

From the viewpoint of facilitating formation of a uniform layer thickness, the median particle diameter (d50) of the carbon material as the first conductive material is preferably 0.01 µm or more and 50 µm or less, 0.01 µm or more and 30 µm or less, or 0.01 µm or more and 10 µm or less.

### Surfactant

The conductive layer may comprise a surfactant from the viewpoint of uniformly dispersing the first conductive material of the conductive layer. When the first conductive material of the conductive layer is a carbon material, the surfactant can evenly distribute the carbon material over the entire conductive layer to form a uniform conductive path, which is more preferable. As the surfactant, various surfactants such as anionic surfactants such as sulfate ester type, phosphate ester type, carboxylic acid type, and sulfonic acid type; cationic surfactants such as quaternary ammonium salt type and amidoamine type; amphoteric surfactants such as alkylbetaine type, amidobetaine type, and amine oxide type; nonionic surfactants such as ether type, fatty acid ester type, and alkyl glucoxides; and polymeric surfactants such as polyacrylic acid, polyacrylate, polysulfonate, polynaphthalenesulfonate, polyalkylenepolyamine alkylene oxide, polyalkylenepolyimine alkylene oxide, polyvinyl picolidone, and cellulose type can be used. These are used alone or in combination of two or more for the purpose of preventing agglomeration of fillers. The surfactant is not limited to these as long as the effect of uniformly dispersing the first conductive material of the conductive layer can be obtained. The surfactant preferably contains at least one selected from the group consisting of ionic surfactants, i.e., anionic surfactants, cationic surfactants, and amphoteric surfactants.

The amount of the surfactant is preferably 1 part by weight or more and 100 parts by weight or less, or 10 parts by weight or more and 60 parts by weight or less, with the total of the first conductive material of the conductive layer being 100 parts by weight.

### Resin

The conductive layer preferably comprises a resin from the viewpoint of enhancing the binding property of the first conductive material and suppressing peeling and detachment of the conductive layer from the substrate. Examples of the resin include styrene resin, acrylic/urethane resin, acrylic/styrene resin, vinyl acetate/acrylic resin, styrene/butadiene resin, acrylonitrile/butadiene resin, natural rubber resin, polybutadiene resin (BR resin), methyl methacrylate/butadiene resin, 2-vinylpyridine/styrene/butadiene resin (VP resin), chloroprene resin (CR resin), polyolefin resins such as polyethylene, polypropylene, polybutene, or copolymers thereof, modified polyolefin resin obtained by chlorinating or acid-modifying a polyolefin resin, fluorine-containing resins such as polyvinylidene fluoride or polytetrafluoroethylene, a fluorine-containing rubber binder such as a vinylidene fluoride-hexafluoropropylene-tetrafluoroethylene copolymer or an ethylene-tetrafluoroethylene copolymer, (meth)acrylic acid-styrene-butadiene copolymer resins and hydrides thereof, polyvinyl alcohol resin, and polyvinyl alcohol-polyacetate copolymer resin.

Among the above resins, acrylic resins or styrene resins are more preferable, and acrylic resins are further preferable, from the viewpoint of improving binding properties and heat resistance. As used herein, "acrylic resins" include acrylic copolymer resins such as acrylic/urethane resins, acrylic/styrene resins, acrylic/styrene/butadiene resins, vinyl acetate/acrylic resins, and polymers such as acrylic resins. As used herein, "styrene-based resins" include polymers such as styrene-based copolymer resins such as acrylic-styrene-based resins, styrene-butadiene-based resins, acrylic-styrene-butadiene-based resins, 2-vinylpyridine-styrene-butadiene-based resins, and styrene resins.

The amount of the resin is preferably 1 part by weight or more and 100 parts by weight or less, or 10 parts by weight or more and 40 parts by weight or less, with the total of the first conductive material of the conductive layer being 100 parts by weight.

These resins may contain one or more other components in the compositions exemplified above. The resin is not limited to one type, and a plurality of types can be used together. For example, a combination of an acrylic resin and a styrene resin can be used.

### Thickener

The conductive layer preferably comprises a thickener from the viewpoint of suppressing peeling and detachment of the conductive layer from the substrate and forming a uniform conductive layer on the surface of the substrate. Examples of thickeners include synthetic polymers such as polyethylene glycol, polypropylene glycol, urethane-modified polyether, polyacrylic acid, polyvinyl alcohol, and vinyl methyl ether-maleic anhydride copolymer, cellulose derivatives such as carboxymethyl cellulose (CMC), carbomethoxy cellulose, hydroxyethyl cellulose, and hydroxyethyl cellulose, natural polysaccharides such as xanthan gum, diutan gum, welan gum, gellan gum, guar gum, carrageenan gum, and pectin, and starches such as dextrin and pregelatinized starch. The thickener can appropriately be selected from the viewpoint of slurry viscosity, pot life, and particle size distribution. One type of thickener can be used alone, and two or more types can be used in combination.

The amount of the thickener is preferably 0.1 parts by weight or more and 50 parts by weight or less, or 1 part by weight or more and 20 parts by weight or less, with the total of the first conductive material of the conductive layer being 100 parts by weight.

### Substrate

The substrate is not particularly limited as long as it is microporous so that ions can permeate therethrough, and preferable examples thereof include porous membranes produced from natural or synthetic materials such as thermoplastic polymers such as polyvinyl and polyolefins, thermosetting polymers such as phenolic resins, natural or synthetic rubbers, rubber materials such as latex, fibrous materials such as synthetic wood pulp (SWP), glass fibers, synthetic fibers, and cellulose fibers, and combinations thereof, and microporous membranes produced from thermoplastic polymers are more preferable. Thermoplastic polymers include basically any acid resistant thermoplastic material suitable for lead-acid battery applications, and preferable thermoplastic polymers include, for example, polyvinyl and polyolefins. Examples of polyvinyl include polyvinyl chloride (PVC). Examples of polyolefins include polyethylene and polypropylene. Polyethylene includes, for example, ultra-high molecular weight polyethylene (UHMWPE).

### Lead-Acid Battery

The lead-acid battery of the present disclosure comprises the separator for a lead-acid battery of the present disclosure. The lead-acid battery is a lead-acid battery comprising a positive electrode, a negative electrode, and the separator of the present disclosure arranged between the positive electrode and the negative electrode. An electrolyte containing dilute sulfuric acid can be used as the electrolyte. The positive electrode grid constituting the positive electrode can be lead or a lead alloy, and the positive electrode active material can be a lead oxide, such as lead dioxide. The negative electrode grid constituting the negative electrode can be lead or a lead alloy, the negative electrode active material can be lead, and the lead negative electrode itself can be, for example, in a sponge-like form. The active materials of the positive electrode and negative electrode may contain 50 wt.% or less of metal elements other than the lead or lead alloy. Dilute sulfuric acid is sulfuric acid having a specific gravity of 1.1 to 1.4, and the electrolyte may contain an additive. From the viewpoint of suppressing sulfation, the additive may contain, for example, aluminum ions. Other additives include metal ions such as lithium ions and sodium ions.

By providing the separator of the present disclosure between the positive electrode and the negative electrode, a lead-acid battery which has improved charge acceptance and cycle characteristics and which does not cause a decrease in initial discharge capacity can be obtained. The separator for a lead-acid battery of the present disclosure can be used in both open lead-acid batteries and valve regulated lead-acid batteries.

### Method for Production of Separator for Lead-Acid Battery

### Preparation of Substrate

Though the production method will be described below taking a substrate composed of a polyolefin, such as ultra-high molecular weight polyethylene, as an example, the substrate is not limited to substrates obtained by the following production methods, as long as a conductive layer can be formed thereon.

The method for the production of the substrate comprises the steps of: providing a thermoplastic polymer, such as ultra-high molecular weight polyethylene (hereinafter "UHMWPE"); providing a particulate filler; providing a processing plasticizer which is liquid at room temperature (25 °C); mixing the UHMWPE, a particulate filler, and a processing plasticizer to form a mixture; extruding the mixture through a die such as a slot die or inflation die to form a sheet; and extracting to partially or completely remove the plasticizer from the sheet, thereby forming a microporous matrix. After the step of forming the sheet, and before the extraction step, the sheet may be further processed by casting onto chilled rollers, calendering, or blowing. The cast or calendered sheet can then be subjected to the extraction process described above to partially or completely remove the plasticizer, thereby forming a microporous matrix.

The microporous matrix obtained by the above method contains UHMWPE, a plasticizer (when partially extracted), and a particulate filler dispersed throughout the matrix. The particulate filler preferably accounts for 5% or more and 95 wt.% or less of the microporous matrix. As used herein, the term "microporous matrix" refers to a structure having a network of interconnected pores, in which the entire microporous matrix is interconnected by the constituent materials described above. Preferably, the pores occupy 25% or more and 90% or less of the volume of the microporous matrix. The method for the production of the substrate may further comprise, after the extraction step, stretching the microporous matrix and calendering the stretched microporous matrix to produce the final microporous material. By performing the calendering process, a substrate having excellent dimensional stability even at high temperatures can be formed.

### Formation of Conductive Layer

The conductive layer may be laminated directly onto the surface of the substrate or indirectly as a laminate intermediate layer or laminate surface layer of the substrate with a single layer or a laminate consisting of a plurality layers. In the latter case, a conductive layer may be introduced as an intermediate step in the process of laminating a single layer or plurality of layers on the substrate, or after introducing the conductive layer into a portion of the laminate material, the laminate including the conductive layer may be overlapped on and introduced to the substrate.

The method for forming the conductive layer laminated on the substrate may further comprise the following steps: mixing a material forming the conductive layer with a solvent; introducing the material mixture onto the surface of the substrate or laminate; and drying the mixture to remove the solvent. The material is preferably homogenized in a solvent to form a mixture. The solvent may be an aqueous solvent or an organic solvent. The method for introducing includes applying the mixture in a wet state onto the surface of the substrate or laminate according to, for example, a die coating method or a gravure coating method. The substrate or laminate coated with the mixture may be subjected to further processing such as pressing. When the laminate comprises the conductive layer as an intermediate layer, another layer may be formed on the conductive layer.

The formation of cracks may be performed during the drying step described above, or by physically breaking the surface of the conductive layer in another or additional step. For example, the cracks are preferably formed in the drying step from the viewpoint of easy formation of the cracks and reduction in the number of steps. More preferably, the wet mixture introduced onto the surface of the substrate or laminate is dried in an atmosphere of 85°C at a certain drying speed or higher and for a certain drying time or longer. The drying method includes, for example, hot air drying.

The cracks can be selectively formed by controlling the drying speed and drying time. By evaporating the solvent at a certain drying speed or higher, the mixture leaves a solid layer with cracks. When the drying speed is increased and the drying is completed rapidly, cracks having a large average crack width can be formed. Conversely, it is possible to form cracks having a minute width by drying at a certain drying speed or lower and for a certain drying time or longer. Specifically, a preferable average crack width can be formed by drying the mixture in a certain range of drying speed and a certain range of drying time. By using the first conductive material having the above-described median particle size (d50) as the material forming the conductive layer, the formation of the cracks and the adjustment of the average crack width and area ratio may be performed.

### Method for Production of Lead-Acid Battery

The lead-acid battery comprising the separator of the present disclosure comprises a positive electrode, a negative electrode, and the separator of the present disclosure between the positive electrode and the negative electrode. The shape of the separator for a lead-acid battery can be determined so as to match each component of the lead-acid battery. The lead-acid battery of the present disclosure preferably comprises a container, a positive electrode, a negative electrode, and dilute sulfuric acid as an electrolyte, wherein the separator of the present disclosure is arranged between the positive electrode and the negative electrode. The positive electrode grid constituting the positive electrode may be lead or a lead alloy, and the positive electrode active material may be a lead oxide, such as lead dioxide. The negative electrode grid constituting the negative electrode may be lead or a lead alloy, the negative electrode active material may be lead, and the lead negative electrode itself can be, for example, in a sponge-like form. The active materials for the positive electrode and the negative electrode may contain 30 wt.% or less of other metal elements in the above composition. The dilute sulfuric acid is sulfuric acid having a specific gravity of 1.1 to 1.4, and may further contain additives. By using a separator comprising a conductive layer in a lead-acid battery, the formation of conductive paths on the separator surface can be partially restricted, and as a result, the ER in the electrolyte can be reduced. Thus, it is preferable to arrange the separator of the present disclosure between the positive electrode and the negative electrode of the lead-acid battery. Though not particularly limited, the separator preferably comprises the conductive layer on the side of the negative electrode from the viewpoint of improving the charge acceptance of the negative electrode. The separator for a lead-acid battery of the present disclosure can be used in both open lead-acid batteries and valve regulated lead-acid batteries.

### Metal or Metal Compound having Standard Electrode Potential of -0.7 V or Less

From the viewpoint of suppressing deterioration of water loss characteristics, the lead-acid battery comprising the separator of the present disclosure may contain, in the electrolyte, a metal having a standard electrode potential of -0.7 V or less or a metal compound composed of a metal having a standard electrode potential of -0.7 V or less (hereinafter simply referred to as "metal or metal compound"). The metal or metal compound preferably does not contain a metal or metal compound having a standard electrode potential greater than -0.7 V so as not to influence battery performance.

Examples of metals having a standard electrode potential of -0.7 V or less include zinc, vanadium, chromium, manganese, zirconium, titanium, aluminum, beryllium, magnesium, sodium, calcium, strontium, barium, potassium, rubidium, and lithium. Examples of metal compounds composed of a metal having a standard electrode potential of -0.7 V or less include hydrogen compounds, oxides, hydroxides, halides, nitrides, oxoacid salts, sulfates, nitrates, carbonates, acetates, metal complexes (coordination compounds), and organometallic compounds.

### Zinc or Zinc Compounds

The metal or metal compound preferably contains zinc or a zinc compound from the viewpoint of suppressing deterioration of the water loss characteristics. Examples thereof include zinc, zinc oxide, zinc sulfate, zinc fluoride, zinc chloride, zinc bromide, zinc iodide, zinc sulfide, zinc nitrate, zinc trifluoromethanesulfonate, zinc phosphide, zinc phosphate, zinc diphosphate, zinc borate, zinc propionate, zinc arsenate, zinc carbonate, zinc thiocyanate, zinc pyrophosphate, zinc peroxide, zinc perchlorate, zinc acetate, zinc diethoxy, zinc 2-ethylhexanoate, zinc laurate, zinc stearate, zinc naphthenate, zinc acetylacetonate, zinc myristate, zinc palmitate, zinc ricinoleate, zinc undecylenate, zinc aspartate, zinc acetylmethionine, zinc gluconate, zinc citrate, zinc polypyrrolidone carboxylate, and zinc picolinate. Among the above zinc or zinc compounds, zinc, zinc oxide, and zinc sulfate are more preferable, and zinc oxide is further preferable, in order to suppress the deterioration of the water loss characteristics.

### EXAMPLES

### Average Crack Width

A TM3000 Miniscope manufactured by HITACHI is used to observe and measure the width of cracks. The surface of the separator is observed with the TM3000 Miniscope (magnification: 5000 times), the width of cracks on the conductive layer of the separator is measured at 10 arbitrary points, and the arithmetic mean value of approximately 10 points is calculated.

### Average Fiber Diameter of Fibrous Second Conductive Material

A TM3000 Miniscope manufactured by HITACHI is used to observe and measure the average fiber diameter of the fibrous second conductive material. The surface of the separator is observed with the TM3000 Miniscope (magnification: 5000 times), the average fiber diameter of the conductive layer of the separator is measured at 10 arbitrary points, and the arithmetic mean value of approximately 10 points is calculated.

### Relationship Between Average Fiber Diameter and Average Crack Width

The relationship between the average fiber diameter of the fibrous second conductive material and the average crack width of the cracks is calculated by average fiber diameter/average crack width × 100 and is shown in Table 1.

### Ratio of Area Occupied by Cracks to Entire Surface of Conductive Layer

A digital microscope VHX-6000 manufactured by KEYENCE is used to observe and measure the ratio of the area occupied by cracks to the entire surface of the conductive layer. When observing cracks in the separator removed from the completed lead-acid battery, the following operations are performed before observing with an optical microscope. (1) The removed separator is washed with distilled water. (2) The pH of the washing water is measured, and washing is stopped when the pH becomes neutral to weakly acidic. However, in (1) and (2), no physical scrubbing or the like is performed. (3) The separator is dried by natural drying. However, rapid drying such as hot air drying should not be performed.

ZS200 was used as the microscope lens. The imaging mode of the microscope is set to standard mode (2 million pixels [1600 × 1200]), the conductive layer surface is observed at 500 times magnification, and using an automatic area measurement function, the ratio of the cracks area to the area of the observation area is measured as the ratio of the cracks. In the measurement, the measurement mode: particle count, extraction mode: color extraction, specification of extraction area: numerical specification (rectangle, 400 µm × 400 µm) are selected and input, and the color tolerance is adjusted to set the color contrast for smooth surfaces and cracks on the surface of the conductive layer, respectively. The area of the color contrast provided in the cracks is automatically measured to obtain the cracks area and ratio of cracks. Table 1 shows the ratio of cracks measurement results. The unit is percentage. The imaging conditions are summarized below.

### [Imaging Conditions]

Imaging magnification: 500 times
Imaging conditions: 2 million pixels [1600 × 1200]
Epi-illumination: Coaxial epi-illumination
Imaging range: 400 µm × 400 µm
Under the above imaging conditions, a contrast occurs between the surface of the conductive layer and the groove-like structure, making it possible to distinguish between them. Typically, the groove-like structure is observed as thin streaks on the surface of the conductive layer.

### Thickness of Conductive Layer

A Digital Microscope VHX-6000 manufactured by KEYENCE is used to observe and measure the film thickness of the conductive layer. The cross section of the separator is observed with a digital microscope (magnification: 200 times), the thickness of the cross section of the conductive layer of the separator is measured at three arbitrary points, and the arithmetic mean value of the three points is calculated.

### Surface Electrical Resistance

A four-point probe (5.0 mm pitch) is used to measure the surface electrical resistance, using a resistance meter RM3545 RESISTANCE METER manufactured by HIOKI. When measuring the surface electric resistance of the separator taken from the completed lead-acid battery, the following operations are performed before measurement with the resistance meter. (1) The removed separator is washed with distilled water. (2) The pH of the washing water is measured, and washing is stopped when the pH becomes neutral to weakly acidic. However, in (1) and (2), no physical scrubbing or the like is performed. (3) The separator is dried by natural drying. However, rapid drying such as hot air drying should not be performed.

A 4-probe resistometer-PC application is used as the measurement software for the resistance measure. "Normal measurement" is selected for the measurement mode, and "resistance [Ω]" is selected as the measurement unit. The measurement conditions are as follows.

### [Measurement Conditions]

Long side of sample: 100 mm
Short side of sample: 100 mm
Sample thickness: 10 µm
x-coordinate: 50 mm
y-coordinate: 50 mm
Probe used: 5.0 mm
Under the above measurement conditions, the resistance of the conductive layer of the sample is measured at 6 points, and the average value was taken as the surface electrical resistance of the sample. The unit is Ω. The obtained surface electric resistance is rated AA when 300 Ω or less, A when over 300 Ω and 800 Ω or less, B when over 800 Ω and 3000 Ω or less, and C when over 3000 Ω.

### Electrical Resistance (ER) in Electrolyte

The ER is measured using a Palico measurement system manufactured by Caltronics. Dilute sulfuric acid having a specific gravity of 1.28 is used as the sulfuric acid bath, and the temperature of the sulfuric acid bath is 27°C. Before measurement, the separator is immersed in dilute sulfuric acid having a specific gravity of 1.28 and a temperature of 25°C for 24 hours. The ER of the separator is measured at three points under the above measurement conditions, and the average value is obtained. The unit is Q·cm². The obtained ER is evaluated as A when it was 1.20 times or less the ER of the substrate, B when it was more than 1.20 times and 1.30 times or less, and C when it was more than 1.30 times.

### Example 1

A polyethylene separator (RipTide C manufactured by Daramic) was used as the substrate. To form the conductive layer, first, a slurry was prepared. Carbon black, carbon nanotubes, an ionic surfactant, an acrylic copolymer latex, and a thickener as solids were dispersed and mixed in water to prepare a slurry. At this time, the carbon black was 64.6 wt.% based on the total weight of solids in the slurry, TUBALL BATT^{™} H₂O CMC 0.4% manufactured by Kusumoto Kasei Co., Ltd., which is a mixture of carbon nanotubes and a thickener, was 2.5 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, and the acrylic copolymer latex was 13.2 wt.% of Polytron^{™} A65S manufactured by Asahi Kasei Corporation based on the total weight of solids in the slurry. Using an applicator, the slurry was manually applied (hand-coated) onto the side of the substrate having a back web, and cracks were formed in the conductive layer by drying in an oven at 80°C for 5 minutes to obtain a separator comprising a conductive layer. At this time, the applicator gap (clearance formed between the separator and the applicator) was 45 µm. the results of evaluation of the substrate and the obtained conductive layer in accordance with the evaluation methods described above are shown in Table 1.

### Example 2

Example 2 was carried out in the same manner as Example 1 except that regarding the slurry, the carbon black was 65.7 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 0.1 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 3

Example 3 was carried out in the same manner as in Example 1, except that the applicator gap was set to 15 µm.

### Example 4

Example 4 was carried out in the same manner as in Example 2, except that the applicator gap was set to 15 µm.

### Example 5

Example 5 was carried out in the same manner as Example 1, except that regarding the slurry, the carbon black was 44.6 wt.% of Cabot PBX52 based on the total weight of solids in the slurry, zinc oxide was 20 wt.% of zinc oxide type 1 manufactured by Sakai Chemical Industry Co., Ltd. based on the total weight of solids in the slurry, the TUBALL BATT^{™} H₂O CMC 0.4% manufactured by Kusumoto Kasei Co., Ltd., which is a mixture of carbon nanotubes and a thickener, was 2.5 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, and the acrylic copolymer latex was 13.2 wt.% of Polytron^{™} A65S manufactured by Asahi Kasei Corporation based on the total weight of solids in the slurry.

### Example 6

Example 6 was carried out in the same manner as Example 1, except that regarding the slurry, the carbon black was 45.7 wt.% based on the total weight of solids in the slurry, zinc oxide was 20 wt.% of zinc oxide type 1 manufactured by Sakai Chemical Industry Co., Ltd. based on the total weight of solids in the slurry, the TUBALL BATT^{™} H₂O CMC 0.4% manufactured by Kusumoto Kasei Co., Ltd., which is a mixture of carbon nanotubes and a thickener, was 0.1 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 7

Example 7 was carried out in the same manner as Example 1, except that regarding the slurry, the carbon black was 32.3 wt.% of PBX52 manufactured by Cabot based on the total weight of solids in the slurry and 32.3 wt.% of Denka Black^{™} HS-100 manufactured by Denka Co., Ltd. based on the weight of the total solid content in the slurry, the TUBALL BATT H₂O CMC 0.4% manufactured by Kusumoto Kasei Co., Ltd., which is a mixture of carbon nanotubes and a thickener, was 2.5 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, and the acrylic copolymer latex was 13.2 wt.% of Polytron^{™} A65S manufactured by Asahi Kasei Corporation based on the total weight of solids in the slurry.

### Example 8

Example 8 was carried out in the same manner as Example 1, except that regarding the slurry, the carbon black was 32.9 wt.% based on the total weight of solids in the slurry, Denka Black^{™} HS-100 manufactured by Denka Co., Ltd. was 32.8 wt.% based on the weight of the total solid content in the slurry, the TUBALL BATT^{™} H₂O CMC 0.4% manufactured by Kusumoto Kasei Co., Ltd., which is a mixture of carbon nanotubes and a thickener, was 0.1 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 9

Example 9 was carried out in the same manner as in Example 1, except that the applicator gap was set to 135 µm.

### Example 10

Example 10 was carried out in the same manner as in Example 2, except that the applicator gap was set to 135 µm.

### Example 11

Example 11 was carried out in the same manner as Example 1, except that regarding the slurry, the carbon black was 65.7 wt.% based on the total weight of solids in the slurry, carbon nanotubes NC7000 manufactured by Nanosil Co., Ltd. were 0.1 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 12

Example 12 was carried out in the same manner as Example 1 except that regarding the slurry, the carbon black was 64.8 wt.% based on the total weight of solids in the slurry, carbon nanotubes VGCF^{™} -H manufactured by Showa Denko Co., Ltd., were 1.0 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 13

Example 13 was carried out in the same manner as Example 1, except that regarding the slurry, the carbon black was 65.7 wt.% based on the total weight of solids in the slurry, carbon nanotubes VGCF^{™} -H manufactured by Showa Denko Co., Ltd. were 0.1 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Example 14

Carbon black, carbon nanotubes, an ionic surfactant, an acrylic copolymer latex, and a thickener as the solid content of the slurry were dispersed and mixed in an aqueous solvent consisting of water and an aprotic polar solvent to prepare a slurry. Example 14 was then carried out in the same manner as Example 1, except that the carbon black was 64.6 wt.% based on the total weight of solids in the slurry, the TUBALL BATT^{™} manufactured by Kusumoto Kasei Co., Ltd., which is a mixture of carbon nanotubes and a thickener, was 2.5 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the aprotic polar solvent was 2 wt.% of N-methyl-2-pyrrolidone (NMP) based on the total weight of the slurry.

### Example 15

Example 15 was carried out in the same manner as Example 1, except that regarding the slurry, the carbon black was 69.6 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 2.5 wt.% based on the total weight of solids in the slurry, the ionic surfactant was 20.9 wt.% of Polity^{™} P-2000 manufactured by Lion Specialty Chemicals Co., Ltd. based on the total weight of solids in the slurry, and the acrylic copolymer latex was 7.0 wt.% of Polytron^{™} A65S manufactured by Asahi Kasei Corporation based on the total weight of solids in the slurry.

### Example 16

Example 16 was carried out in the same manner as Example 1, except that regarding the slurry, the carbon black was 69.4 wt.% based on the total weight of solids in the slurry, carbon nanotubes VGCF^{™} -H manufactured by Showa Denko Co., Ltd., were 1.0 wt.% based on the total weight of solids in the slurry, the ionic surfactant was 21.1 wt.% of Polity^{™} P-2000 manufactured by Lion Specialty Chemicals Co., Ltd. based on the total weight of solids in the slurry, the acrylic copolymer latex was 7.1 wt.% of Polytron^{™} A65S manufactured by Asahi Kasei Corporation based on the total weight of solids in the slurry, and the thickener was 1.4 wt.% of carboxymethyl cellulose (CMC) based on the total weight of solids in the slurry.

### Example 17

Example 17 was carried out in the same manner as Example 1, except that regarding the slurry, the carbon black was 70.3 wt.% based on the total weight of solids in the slurry, carbon nanotubes NC7000 manufactured by Nanosil Co., Ltd., were 0.1 wt.% based on the total weight of solids in the slurry, the ionic surfactant was 21.1 wt.% of Polity^{™} P-2000 manufactured by Lion Specialty Chemicals Co., Ltd. based on the total weight of solids in the slurry, the acrylic copolymer latex was 7.1 wt.% of Polytron^{™} A65S manufactured by Asahi Kasei Corporation based on the total weight of solids in the slurry, and the thickener was 1.4 wt.% of carboxymethyl cellulose (CMC) based on the total weight of solids in the slurry.

### Example 18

Carbon black, carbon nanotubes, an ionic surfactant, an acrylic copolymer latex, and a thickener as the solid content of the slurry were dispersed and mixed in an aqueous solvent consisting of water and an aprotic polar solvent to prepare a slurry. Example 18 was then carried out in the same manner as Example 1, except that the carbon black was 64.8 wt.% based on the total weight of solids in the slurry, carbon nanotubes VGCF^{™} -H manufactured by Showa Denko Co., Ltd., were 1.0 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, the thickener was 1.3 wt.% of carboxymethyl cellulose (CMC) based on the total weight of solids in the slurry, and the aprotic polar solvent was 2 wt.% of N-methyl-2-pyrrolidone (NMP) based on the total weight of the slurry.

### Example 19

Example 19 was carried out in the same manner as Example 1, except that regarding the slurry, the carbon black was 67.9 wt.% based on the total weight of solids in the slurry, carbon nanotubes NC7000 manufactured by Nanosil Co., Ltd., were 0.1 wt.% based on the total weight of solids in the slurry, the ionic surfactant was 20.4 wt.% of Polity^{™} P-2000 manufactured by Lion Specialty Chemicals Co., Ltd. based on the total weight of solids in the slurry, the acrylic copolymer latex was 10.2 wt.% of Polytron^{™} A65S manufactured by Asahi Kasei Corporation based on the total weight of solids in the slurry, and the thickener was 1.4 wt.% of carboxymethyl cellulose (CMC) based on the total weight of solids in the slurry.

### Example 20

Carbon black, carbon nanotubes, an ionic surfactant, an acrylic copolymer latex, and a thickener as the solid content of the slurry were dispersed and mixed in an aqueous solvent consisting of water and an aprotic polar solvent to prepare a slurry. Example 20 was then carried out in the same manner as Example 1, except that the carbon black was 65.6 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 0.8 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.1 wt.% of Polytron^{™} A65S manufactured by Asahi Kasei Corporation based on the total weight of solids in the slurry, the thickener was 0.8 wt.% of carboxymethyl cellulose (CMC) based on the total weight of solids in the slurry, and the aprotic polar solvent was 2 wt.% of N-methyl-2-pyrrolidone (NMP) based on the total weight of the slurry.

### Example 21

Example 21 carried out in the same manner as Example 1, except that regarding the slurry, the carbon black was 65.6 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 0.8 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.1 wt.% of Polytron^{™} A65S manufactured by Asahi Kasei Corporation based on the total weight of solids in the slurry, and the thickener was 0.8 wt.% of carboxymethyl cellulose (CMC) based on the total weight of solids in the slurry, and additionally, the applicator gap was set to 15 µm.

### Comparative Example 1

Carbon black, carbon nanotubes, an ionic surfactant, an acrylic copolymer latex, and a thickener as the solid content of the slurry were dispersed and mixed in an aqueous solvent consisting of water and an aprotic polar solvent to prepare a slurry. Comparative Example 1 was then carried out in the same manner as Example 1, except that the carbon black was 64.6 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 2.5 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the aprotic polar solvent was 5 wt.% of N-methyl-2-pyrrolidone (NMP) based on the total weight of the slurry.

### Comparative Example 2

Comparative Example 2 was carried out in the same manner as Example 1, except that regarding the slurry, the carbon black was 65.8 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 0.03 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.27 wt.% of carboxymethyl cellulose (CMC) based on the total weight of solids in the slurry.

### Comparative Example 3

Comparative Example 3 was carried out in the same manner as Example 1, except that regarding the slurry, the carbon black was 65.8 wt.% based on the total weight of solids in the slurry, carbon nanotubes were not included, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Comparative Example 4

Comparative Example 4 was carried out in the same manner as Example 1, except that regarding the slurry, the carbon black was 62.8 wt.% based on the total weight of solids in the slurry, carbon nanotubes VGCF^{™} -H manufactured by Showa Denko Co., Ltd., were 3.0 wt.% based on the total weight of solids in the slurry, the ionic surfactant was 19.7 wt.% of Polity^{™} P-2000 manufactured by Lion Specialty Chemicals Co., Ltd. based on the total weight of solids in the slurry, the acrylic copolymer latex was 13.2 wt.% of Polytron^{™} A65S manufactured by Asahi Kasei Corporation based on the total weight of solids in the slurry, and the thickener was 1.3 wt.% of carboxymethyl cellulose (CMC) based on the total weight of solids in the slurry.

### Comparative Example 5

Comparative Example 3 was carried out in the same manner as Example 1, except that regarding the slurry, the carbon black was 72.0 wt.% based on the total weight of solids in the slurry, carbon nanotubes VGCF^{™} -H manufactured by Showa Denko Co., Ltd., were 1.0 wt.% based on the total weight of solids in the slurry, the ionic surfactant was 21.9 wt.% of Polity^{™} P-2000 manufactured by Lion Specialty Chemicals Co., Ltd. based on the total weight of solids in the slurry, the acrylic copolymer latex was 3.6 wt.% of Polytron^{™} A65S manufactured by Asahi Kasei Corporation based on the total weight of solids in the slurry, and the thickener was 1.5 wt.% of carboxymethyl cellulose (CMC) based on the total weight of solids in the slurry.

### Comparative Example 6

Comparative Example 6 was carried out in the same manner as Example 1, except that regarding the slurry, the carbon black was 73.0 wt.% based on the total weight of solids in the slurry, the TUBALL BATT^{™} H₂O CMC 0.4% manufactured by Kusumoto Kasei Co., Ltd., which is a mixture of carbon nanotubes and a thickener, was 0.03 wt.% based on the total weight of solids in the slurry, the ionic surfactant was 21.9 wt.% of Polity^{™} P-2000 manufactured by Lion Specialty Chemicals Co., Ltd. based on the total weight of solids in the slurry, the acrylic copolymer latex was 3.6 wt.% of Polytron^{™} A65S manufactured by Asahi Kasei Corporation based on the total weight of solids in the slurry, and the thickener was 1.47 wt.% of carboxymethyl cellulose (CMC) based on the total weight of solids in the slurry.

**Table 1**

| | Avg crack width [µm] | Avg fiber diameter [nm] | Avg fiber diameter/av g crack width | Crack area ratio [%] | Surface resistance [Ω] | ER [Ω·cm²] |
|---|---|---|---|---|---|---|
| Ex 1 | 5 | 170 | 3.4% | 5 | AA | A |
| Ex 2 | 5 | 100 | 2.0% | 5 | A | A |
| Ex 3 | 5 | 500 | 10% | 4 | AA | A |
| Ex 4 | 5 | 100 | 2.0% | 4 | B | A |
| Ex 5 | 5 | 170 | 3.4% | 5 | AA | A |
| Ex 6 | 5 | 170 | 3.4% | 5 | A | A |
| Ex 7 | 5 | 170 | 3.4% | 3 | AA | A |
| Ex 8 | 5 | 170 | 3.4% | 3 | AA | A |
| Ex 9 | 10 | 100 | 1.0% | 10 | AA | B |
| Ex 10 | 10 | 100 | 1.0% | 10 | AA | B |
| Ex 11 | 5 | 1000 | 20% | 5 | A | B |
| Ex 12 | 5 | 750 | 15% | 5 | B | B |
| Ex 13 | 5 | 1500 | 30% | 5 | A | B |
| Ex 14 | 5 | 1250 | 25% | 5 | B | B |
| Ex 15 | 1 | 50 | 5.0% | 1 | AA | B |
| Ex 16 | 15 | 150 | 1.0% | 20 | AA | A |
| Ex 17 | 5 | 1500 | 30% | 20 | A | A |
| Ex 18 | 5 | 750 | 15% | 20 | B | A |
| Ex 19 | 5 | 1500 | 30% | 0.1 | A | B |
| Ex 20 | 5 | 750 | 15% | 10 | B | A |
| Ex 21 | 5 | 50 | 1.0% | 0.1 | A | B |
| Ex 22 | 5 | 50 | 1.0% | 1 | B | A |
| Ex 23 | 5 | 50 | 1.0% | 1 | B | A |
| Comp Ex 1 | 1 | 330 | 33% | 0.1 | AA | C |
| Comp Ex 2 | 5 | 25 | 0.5% | 5 | C | B |
| Comp Ex 3 | 1 | 0 | 0% | 5 | C | C |
| Comp Ex 4 | 5 | 1650 | 33% | 5 | A | C |
| Comp Ex 5 | 5 | 1650 | 33% | 22 | C | C |
| Comp Ex 6 | 5 | 25 | 0.5% | 22 | C | B |

FIG. 1 is an example of a surface image of the separator for a lead-acid battery having a conductive layer of Example 1, captured with a scanning electron microscope (SEM). In FIG. 1, the average crack width was 5 µm, and the average fiber diameter of the fibrous carbon fibers present in the cracks was approximately 170 nm, which was approximately 3.4% of the width of the cracks.

### INDUSTRIAL APPLICABILITY

The separator for a lead-acid battery of the present disclosure is useful for lead-acid batteries, such as flooded batteries (FB), and in particular, is suitable as a separator for enhanced flooded batteries (EFB).

## Claims

1. A separator for a lead-acid battery, comprising a substrate, and a conductive layer laminated on at least one surface of the substrate,
wherein the conductive layer has cracks, and the conductive layer comprises a first conductive material and a fibrous second conductive material which has an average fiber diameter of 1% or more and 30% or less of an average crack width of the cracks.

2. The separator for a lead-acid battery according to claim 1, wherein the fibrous second conductive material is a fibrous carbon material.

3. The separator for a lead-acid battery according to claim 1 or 2, wherein a percentage of an area occupied by the cracks is 0.1% or more and 30% or less of an entire surface of the conductive layer.

4. The separator for a lead-acid battery according to any one of claims 1 to 3, wherein at least a part of the fibrous second conductive material extends from the conductive layer toward a gap of the cracks.

5. The separator for a lead-acid battery according to any one of claims 1 to 4, wherein the average crack width of the cracks is 1.0 µm or more and 20.0 µm or less.

6. The separator for a lead-acid battery according to any one of claims 1 to 5, wherein the conductive layer has a thickness of 0.1 µm or more and 30 µm or less.

7. The separator for a lead-acid battery according to any one of claims 1 to 6, wherein the cracks extend from a surface of the conductive layer to a layer-substrate boundary.

8. The separator for a lead-acid battery according to any one of claims 1 to 7, wherein the fibrous second conductive material is carbon nanotubes.

9. The separator for a lead-acid battery according to any one of claims 1 to 8, wherein the first conductive material comprises a carbon material.

10. The separator for a lead-acid battery according to any one of claims 1 to 9, wherein the first conductive material comprises at least one selected from the group consisting of furnace black, acetylene black, and ketjen black.

11. A lead-acid battery, comprising a positive electrode, a negative electrode, an electrolyte, and the separator for a lead-acid battery according to any one of claims 1 to 10 between the positive electrode and the negative electrode.

12. The lead-acid battery according to claim 11, wherein the electrode comprises at least one of a metal having a standard electrode potential of -0.7 V or less and a metal compound comprising the metal.

13. The lead-acid battery according to claim 11 or 12, wherein the electrolyte comprises at least one of zinc and a zinc compound.
